# EUROPÄISCHE PATENTANMELDUNG

(11) **EP 2 418 023 A1**
(43) Veröffentlichungstag der Anmeldung: **15.02.2012**
(21) Anmeldenummer: 10172770.9
(22) Anmeldetag: 13.08.2010
(51) Int. Cl.: B08B 9/08, F22B 37/52, F28G 9/00

(54) **Verfahren zum Abschluss einer chemischen Kraftwerksreinigung**

(71) Anmelder: Siemens Aktiengesellschaft, 80333 München (DE)
(72) Erfinder: Kuhnke, Klaus-Dieter, 91058, Erlangen (DE)

(57) **Zusammenfassung**

Die Erfindung betrifft ein Verfahren zum Reinigen mindestens eines Teils eines Wasser-Dampf-Kreislaufs (13,14,15,16) einer Kraftwerksanlage (1,2), wobei eine Reinigungslösung in den zu reinigenden Teil eingebracht und anschließend abgelassen wird und wobei nach Beginn des Ablassens der Reinigungslösung Dampf zum Spülen in den zu reinigenden Teil eingespeist wird. Die Erfindung betrifft ferner die Verwendung des Verfahrens in einem Dampfkraftwerk, in einer Gas- und Dampfturbinenanlage und insbesondere in einem Wasser-Dampf-Kreislauf eines Abhitzedampferzeugers (2).

## Beschreibung

Die Erfindung betrifft ein Verfahren zum Reinigen mindestens eines Teils eines Wasser-Dampf-Kreislaufs einer Kraftwerksanlage, insbesondere ein Wasser sparendes Verfahren zum Abschluss einer chemischen Kraftwerksreinigung.

Der Wasser-Dampf-Kreislauf eines Kraftwerks wird üblicherweise vor Inbetriebnahme chemisch gereinigt. Dabei kommen entweder Säuren oder EDTA (Ethylendiamintetraessigsäure) zum Einsatz. Diese Chemikalien müssen anschließend aus dem System wieder entfernt werden. Bei einer typischen Säurebeizung ist dazu das mindestens vierfache Systemvolumen notwendig (bis zu 1000m3). Dabei ergeben sich zwei Probleme:
1. Das Gesamtvolumen muss als Abwasser behandelt bzw. entsorgt werden. Das führt mit zunehmend strengeren Auflagen zu hohen Kosten.
2. Die Nachspülung ist bezüglich Ablauf und Entleerung empfindlich gegen nicht korrekte Durchführung. Das Risiko erneuter Korrosion ist groß.

Daher werden bei der Säurebeizung in der Regel der Netzmittelschritt und der Beizschritt zusammengefasst, die Beizlösung wird nicht entleert und anschließend nass in nass durch Deionat ersetzt und danach passiviert. Der Wasserverbrauch ist jedoch hoch.

Aufgabe der Erfindung ist es, das genannte Verfahren weiterzuentwickeln, so dass das Abwasservolumen verringert ist.

Erfindungsgemäß wird diese Aufgabe gelöst durch ein Verfahren gemäß Anspruch 1. Vorteilhafte Weiterbildungen der Erfindung sind in den jeweiligen abhängigen Ansprüchen definiert. Indem bei einem Verfahren zum Reinigen mindestens eines Teils eines Wasser-Dampf-Kreislaufs einer Kraftwerksanlage, wobei eine Reinigungslösung in den zu reinigenden Teil eingebracht und anschließend abgelassen wird, nach Beginn des Ablassens der Reinigungslösung Dampf zum Spülen in den zu reinigenden Teil eingespeist wird, wird folgendes erreicht:
Wenn die Reinigungslösung aus dem System abgelassen und unmittelbar nach oder während der Entleerung Dampf eingespeist wird, wobei die Tiefpunktentleerungen geöffnet bleiben, kondensiert der einströmende Dampf auf den Metalloberflächen und das gebildete Kondensat wird über die Entleerung abgeführt. Durch die Verwendung von Dampf anstatt Wasser wird das Abwasservolumen verringert. Damit ist ein kleineres Beizbecken möglich und die Entsorgungskosten werden ebenfalls reduziert.

Vorteilhafter Weise wird der Dampf an mindestens einem Hochpunkt des zu reinigenden Teils eingespeist. Durch die Kondensation erwärmt sich das Metall und der Kondensationspunkt verschiebt sich von der Einspeisestelle in Richtung Tiefpunktentleerung. Somit ist eine effektive Reinigung vom Hochpunkt zur Tiefpunktentleerung sichergestellt. Weiterhin muss bei einer Dampfeinspeisung an einem Hochpunkt nicht abgewartet werden, bis die Reinigungslösung vollständig oder zumindest zum großen Teil abgelassen ist, sondern es kann unmittelbar mit Beginn des Ablassens der Reinigungslösung Dampf in den zu reinigenden Teil eingeleitet werden, so dass der Reinigungsvorgang beschleunigt werden kann.

Dabei ist es zweckmäßig, wenn der Dampf in eine Trommel eines Dampfkessels eingespeist wird, die oberhalb des Verdampfers und zentral bezogen auf ein System umfassend einen Economizer, einen Verdampfer und einen Überhitzer angeordnet ist.

Es ist vorteilhaft, wenn ein Alkalisierungsmittel dem Dampf zugegeben wird. Somit kann die Effektivität der anschließenden Trockenkonservierung gesteigert werden. Eine Konservierung ist wichtig, wenn Dampferzeugungsanlagen außer Betrieb gehen, um die Anlage gegen Stillstandskorrosionen zu schützen.

Zweckmäßiger Weise wird Ammoniak als Alkalisierungsmittel dem Dampf zugegeben. Als eine der meistproduzierten Chemikalien und Grundstoff für die Produktion vieler weiterer Stickstoffverbindungen wird Ammoniak im großtechnischen Maßstab hergestellt und ist somit bei überschaubaren Kosten leicht verfügbar.

Vorteilhafter Weise wird oder bleibt mindestens eine Tiefpunktentleerung im zu reinigenden Teil geöffnet, wobei solange Dampf eingespeist wird, bis an der Tiefpunktentleerung Dampf austritt. Auf diese Weise wird sichergestellt, dass das gesamte System, vom Hochpunkt bis zur Tiefpunktentleerung, mit einer für die Reinigung ausreichenden Dampfmenge in Kontakt geraten ist.

Zweckmäßiger Weise wird die Tiefpunktentleerung geschlossen, wenn an ihr Dampf austritt. Wenn an der Tiefpunktentleerung Dampf austritt, kann davon ausgegangen werden, dass die Spülung des Systems, zumindest im Bereich dieser Tiefpunktentleerung, abgeschlossen ist. Bei größeren Systemen wird zweckmäßigerweise solange Dampf eingespeist, bis an allen Tiefpunktentleerungen des zu reinigenden Teils Dampf ausgetreten ist. Dann wird die Dampfeinspeisung geschlossen und alle Entleerungen werden wieder geöffnet.

Es ist vorteilhaft, wenn nach dem Spülen mit Dampf Entlüftungen im gereinigten Teil der Kraftwerksanlage geöffnet werden, bis Restwasser aus dem System verdunstet ist. Werden alle Entlüftungen und Entleerungen unmittelbar nach der Spülung geöffnet, verdunstet Restwasser komplett aus dem heißen System und es ist trockenkonserviert.

Vorteilhafter Weise findet das Verfahren Verwendung in einem Dampfkraftwerk als Kraftwerksanlage.

Ebenso vorteilhaft ist es, wenn das Verfahren in einer Gas-und Dampfturbinenanlage als Kraftwerksanlage verwendet wird.

Es ist insbesondere vorteilhaft, wenn das Verfahren in einem Wasser-Dampf-Kreislauf eines Abhitzedampferzeugers verwendet wir.

Mit dem erfinderischen Verfahren wird das Abwasservolumen verringert. Damit ist ein kleineres Beizbecken möglich und die Entsorgungskosten werden reduziert. Weiterhin ist das System nach der Dampfspülung trockenkonserviert.

Die Erfindung wird beispielhaft anhand der Zeichnungen näher erläutert. Es zeigen schematisch und nicht maßstäblich:
- FIG 1: einen Ausschnitt aus einer Gas- und Dampfturbinenanlage in kaltem Zustand,
- FIG 2: einen Ausschnitt aus einer Gas- und Dampfturbinenanlage in teilweise erwärmtem Zustand und
- FIG 3: einen Ausschnitt aus einer Gas- und Dampfturbinenanlage angefüllt mit Dampf.

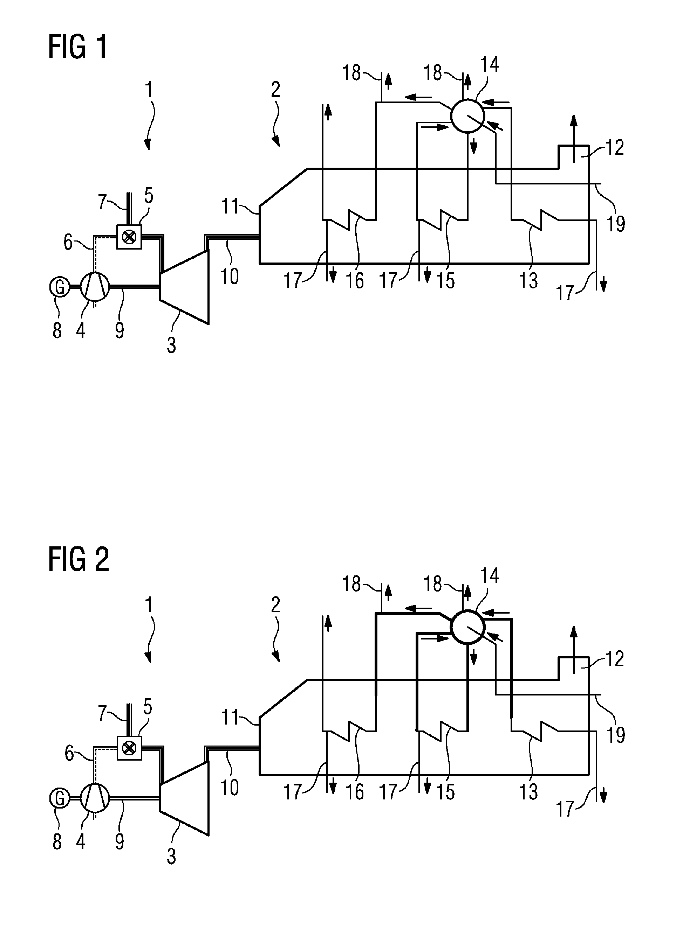

Die Figur 1 zeigt schematisch und beispielhaft einen Ausschnitt aus einer Gas- und Dampfturbinenanlage, umfassend eine Gasturbinenanlage 1 und einen Abhitzedampferzeuger 2. Die Gasturbinenanlage 1 umfasst dabei eine Gasturbine 3 mit angekoppeltem Luftverdichter 4 und eine der Gasturbine 3 vorgeschaltete Brennkammer 5, die an eine Frischluftleitung des Luftverdichters 4 angeschlossen ist. In die Brennkammer 5 mündet eine Brennstoffleitung 7. Die Gasturbine 3 und der Luftverdichter 4 sowie ein Generator 8 sitzen auf einer gemeinsamen Welle 9.

Von der Dampfturbinenanlage ist lediglich der Abhitzedampferzeuger 2 gezeigt. Zum Zuführen von in der Gasturbine 3 entspanntem Arbeitsmittel oder Rauchgas in den Abhitzedampferzeuger 2 ist eine Abgasleitung 10 an einen Eingang 11 des Abhitzedampferzeugers 2 angeschlossen. Das entspannte Arbeitsmittel aus der Gasturbine 3 verlässt den Abhitzedampferzeuger 2 über dessen Ausgang 12 in Richtung auf einen nicht näher dargestellten Kamin.

Im Abhitzedampferzeuger 2 sind exemplarisch Komponenten des Hochdruckteils eines Wasser-Dampf-Kreislaufs der Dampfturbinenanlage gezeigt. Ein Kondensatvorwärmer 13 oder Economizer ist ausgangsseitig mit einer Dampftrommel 14 für das umlaufende Wasser und zur Dampfabtrennung verbunden. Ein Verdampfer 15 ist zur Bildung eines geschlossenen Verdampferumlaufs ein- und ausgangsseitig an die Trommel 14 angeschlossen. Vorgewärmtes Speisewasser fließt über die Trommel 14 in den Verdampfer 15, wird dort verdampft und als Sattdampf zurück in die Trommel 14 geführt. Abgetrennter Dampf wird in den Überhitzer 16 geführt und dort überhitzt. Der Überhitzer 16 ist ausgangsseitig mit einem Dampfeinlass einer nicht gezeigten Dampfturbine verbunden.

Zur Restwasserentleerung weisen die Komponenten des Wasser-Dampf-Kreislaufs Tiefpunktentleerungen 17 auf. Entlüftungen 18 dienen der Belüftung des Wasser-Dampf-Kreislaufs. Eine Hilfsdampfleitung 19 mündet in die Trommel 14.

Die Figuren 1 bis 3 sind bzgl. der gezeigten Vorrichtung identisch. Mit Hilfe unterschiedlicher Linienstärken für dieselbe Komponente in verschiedenen Figuren soll das erfinderische Verfahren jedoch deutlicher dargestellt werden. Dabei steht eine dünne Linie im Abhitzedampferzeuger 2 für eine kalte Komponente an der Dampf kondensiert und eine dicke Linie für eine heiße Komponente (> 100°C).

Figur 1 zeigt somit das kalte System bei der chemischen Reinigung, bei der entweder Säuren oder EDTA zum Einsatz kommen. Sobald die Reinigungslösung über die Tiefpunktentleerungen 17 abgelassen wird, kann zur Nachspülung über die Hilfsdampfleitung 19 Dampf in die Trommel 14 geleitet werden. Der Dampf kondensiert auf den Metalloberflächen von Trommel 14, Verdampfer 15, Kondensatvorwärmer 13, Überhitzer 16 und den sie verbindenden Leitungen und das gebildete Kondensat wird über die Tiefpunktentleerungen 17 abgeführt.

Mit fortschreitender Dauer der Dampfzuführung erwärmt sich das Metall durch die Kondensation, und der Kondensationspunkt verschiebt sich ausgehend von der Dampftrommel 14 als Einspeisestelle in Richtung Tiefpunktentleerungen 17 (siehe Figur 2).

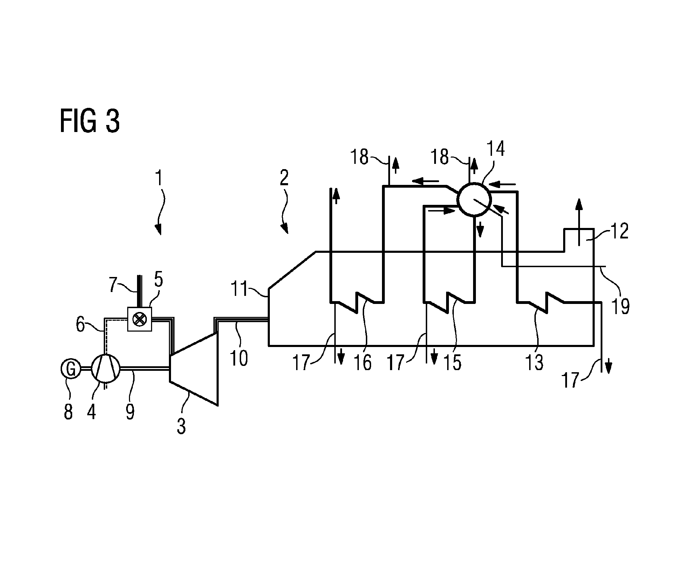

Wenn das System, wie in Figur 3 gezeigt, entsprechend aufgewärmt und die Spülung abgeschlossen ist, tritt an einer Tiefpunktentleerung 17 Dampf aus. Bei größeren Systemen mit mehreren Tiefpunktentleerungen 17 werden diejenigen Tiefpunktentleerungen 17, an denen Dampf austritt, geschlossen und die Spülung wird so lange fortgesetzt, bis an allen Tiefpunktentleerungen 17 Dampf ausgetreten ist. Dann wird die Dampfeinspeisung geschlossen und alle Tiefpunktentleerungen 17 wieder geöffnet. Zur besseren Verdunstung des Restwassers werden zusätzlich auch Entlüftungen 18 geöffnet.

## Patentansprüche

1. Verfahren zum Reinigen mindestens eines Teils eines Wasser-Dampf-Kreislaufs einer Kraftwerksanlage, wobei eine Reinigungslösung in den zu reinigenden Teil eingebracht und anschließend abgelassen wird, **dadurch gekennzeichnet, dass** nach Beginn des Ablassens der Reinigungslösung Dampf zum Spülen in den zu reinigenden Teil eingespeist wird.

2. Verfahren nach Anspruch 1, wobei der Dampf an mindestens einem Hochpunkt des zu reinigenden Teils eingespeist wird.

3. Verfahren nach einem der Ansprüche 1 oder 2, wobei der Dampf in eine Trommel (14) eines Dampfkessels eingespeist wird.

4. Verfahren nach einem der vorhergehenden Ansprüche, wobei ein Alkalisierungsmittel dem Dampf zugegeben wird.

5. Verfahren nach Anspruch 4, wobei Ammoniak dem Dampf zugegeben wird.

6. Verfahren nach einem der vorhergehenden Ansprüche, wobei mindestens eine Tiefpunktentleerung (17) im zu reinigenden Teil geöffnet wird oder bleibt und solange Dampf eingespeist wird, bis an der Tiefpunktentleerung (17) Dampf austritt.

7. Verfahren nach Anspruch 6, wobei die Tiefpunktentleerung (17) geschlossen wird, wenn an ihr Dampf austritt.

8. Verfahren nach Anspruch 7, wobei solange Dampf eingespeist wird, bis an allen Tiefpunktentleerungen (17) des zu reinigenden Teils Dampf ausgetreten ist.

9. Verfahren nach einem der vorherigen Ansprüche, wobei nach dem Spülen mit Dampf Entlüftungen (18) im gereinigten Teil der Kraftwerksanlage geöffnet werden, bis Restwasser aus dem System verdunstet ist.

10. Verwendung des Verfahrens nach einem der vorhergehenden Ansprüche in einem Dampfkraftwerk als Kraftwerksanlage.

11. Verwendung des Verfahrens nach einem der Ansprüche 1 bis 9 in einer Gas- und Dampfturbinenanlage als Kraftwerksanlage.

12. Verwendung des Verfahrens nach einem der Ansprüche 1 bis 9 in einem Wasser-Dampf-Kreislauf eines Abhitzedampferzeugers (2).
